# EUROPEAN PATENT APPLICATION

(11) **EP 2 202 012 A1**
(43) Date of publication of application: **30.06.2010**
(21) Application number: 09178959.4
(22) Date of filing: 11.12.2009
(51) Int. Cl.: B21D 28/28, F16L 27/093

(54) **Method for the production of a fitting for fluids**

(30) Priority: 24.12.2008 IT PN20080095
(71) Applicant: GI.DI. Meccanica S.p.A., 31028 Vazzola (TV) (IT)
(72) Inventor: Giusti, Dino, 31015, CONEGLIANO (Treviso) (IT)
(74) Representative: Gonella, Mario

(57) **Abstract**

Objective: the invention aims at developing a method of manufacturing bolts for banjo-type fittings on a single transfer line, eliminating the operation of drilling the side holes that presently is carried out off-line.

Solution: the perforation of the side passages on the bolt is carried out through a punching operation on bolts that are previously formed so as to have a cylindrical (annular) wall of limited thickness in order to make it easier to punch the holes through it.

After punching, the bolt is subjected to a drawing step to reduce the outside diameter of the portion to be threaded, and a rolling operation is finally carried out on said portion to create the desired thread.

All said operations are carried out automatically on a transfer line.

## Description

The present invention relates to an improved method of manufacturing a hydraulic fitting that allows the passage of a fluid from a pipe to a separate container, and that upon installation of said fitting allows it to be set in any position in a plane at right angles to an axis generally passing through said container, following a variable 360° direction around said axis.

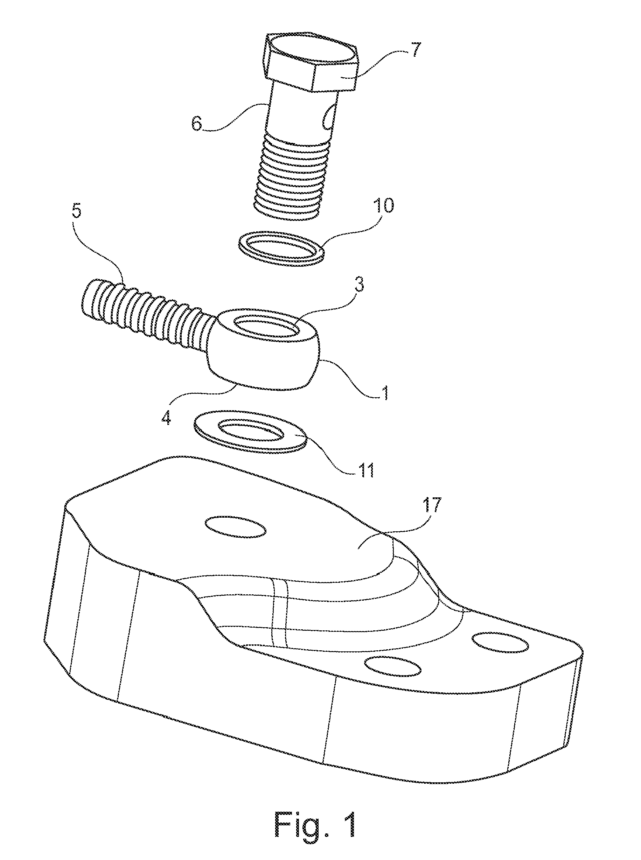

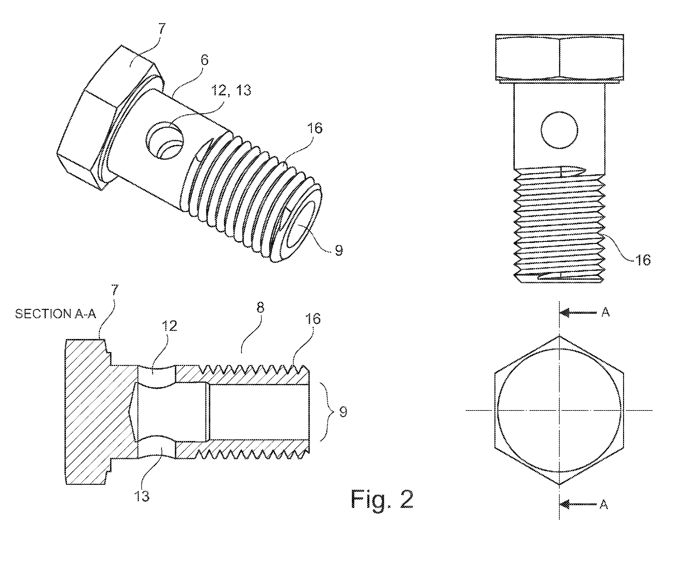

Fittings for fluids, particularly oil, as illustrated generally in Figures 1 to 4, are known in the art. Such types of fittings are known in the art as "banjos" or "banjo fittings", as will also be defined hereunder.

Fig. 1 is an exploded view of two components of a banjo-type fitting.

Figures 2, 2A and 2B illustrate, respectively, a side view, an axial section, and an external perspective view of a banjo bolt according to the known art.

Fig. 3 illustrates an axial cross section of a banjo bolt generally according to the previous figures, installed in its final position.

These fittings substantially consist of two main components, specifically:
- an eyelet 1, consisting of an internally hollow body, provided with coaxial circular openings 3, 4 arranged on two opposite sides of said hollow body, and of an extension 5 lateral with respect to said eyelet 1 and generally at a right angle to the common axis of said openings 3, 4, said extension being internally hollow and in communication with the internal cavity of said hollow body 1;
- a bolt provided with a body 6 and a head 7, of known type.

Said bolt is internally hollow, except for the head, and its internal cavity 8 opens outwardly with a hole 9 from the circular end of said body opposite said head 7; in addition, it is sized so as to perfectly fit in an airtight manner, preferably through suitable gaskets 10, 11, in said openings 3, 4.

Said bolt is provided on its lateral cylindrical surface with one or more passages 12, 13 that put the exterior environment in communication with said internal cavity.

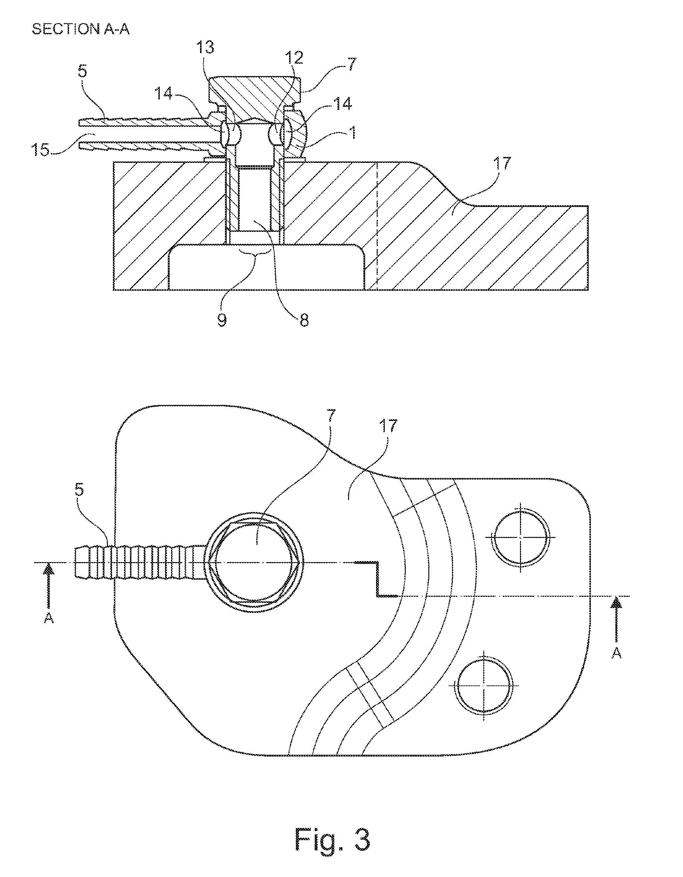

Upon installation, as shown in Fig. 3, said bolt is inserted into the corresponding eyelet so that an annular space 14 is created between the empty inside volume of the eyelet and the cylindrical external surface of the bolt.

Said bolt is initially inserted through said openings 3, 4 of the eyebolt, and then it is screwed in with its corresponding screw thread 16 in a corresponding thread in the supporting container 17 on which it is applied.

As described above, said annular space 14 is thus put automatically into communication with both the duct 15 inside said lateral extension 5 and, through said passages 12, 13, with said internal cavity 8, and therefore, through said hole 9, with the external environment of its intended use.

In short, a flow of liquid fed into said duct 15 of the extension 5 can thus flow freely into said annular space 14, and from there through said passages 12, 13 it flows into the internal cavity 8, and through said hole 9 it is conveyed toward its final destination; moreover, it is obvious that the communication path so defined can be followed by the fluid in both directions.

The advantage of this solution consists in its simplicity of construction and its dependability, and also in the well-known fact that said extension 5 of the eyelet can be set in any direction with respect to the axis of said bolt. All that has been disclosed is well known, and it has been briefly summarized only for the purpose of facilitating an understanding on the part of the user.

Moreover, products of this type have also been extensively disclosed, for example, in the following patents cited herein solely for reference: US 2008/0277920, US 5,533,764, WO 2005/116507, JP 21289227 A2, US 2003/0042737 A1, US 2007/0182156 A1.

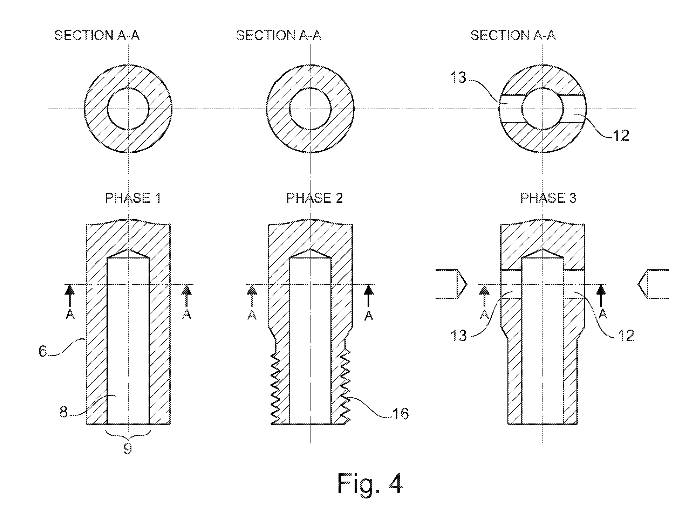

With reference to Fig. 4, said bolt is formed using known material deformation processes, including in particular cold forging.

A typical processing cycle is described in the following production phases:
1) the internal cavity 8 is formed from a round rod or bar by pressing, or coining, or forging or other known method;
2) the next phase consists of forming the most suitable outside diameter for the subsequent threading 19 of the free end of the bolt, achieved by a known process, as for example rolling or stock removal on the part of the external surface of the bolt concerned;
3) the final step is the production of said passages 12, 13; this is necessarily achieved with a machining step with stock removal, that is by drilling from outside the body 6 of the bolt. (As can be seen in this figure, the bolt is shown, in each phase, in the two corresponding sections in plan and axial views.)

In addition, in the bolt production cycle the necessary processes are carried out to form the head 20 of the bolt itself. The head is initially formed from a first pressing or forging operation, and said head 20 is subsequently shaped as desired, usually in a square or hexagonal shape.

However, such operations can be carried out independently of the other processes, and they are not affected by the present invention.

Therefore, they are omitted here for the sake of simplicity, although it remains understood that they can be included in the bolt machining cycle, both according to the known method and, in line with to the present invention, in a manner well known to a person skilled in the art.

All the above operations from 1 to 3, and naturally also the operations to form the head 20, are normally carried out in a completely automatic "transfer" production line; a person skilled in the art is well acquainted with the advantages and the characteristics of such production method.

One basic restriction of said method is pointed out: all the production phases in the individual workstations must be carried out in step, and possibly with the same duration.

The duration of the machining "step", that is, the sum of the machining time and the time for transferring the components from one station to the next must naturally be the same.

And effectively the "step" of the transfer machine must be compatible with the speed or pace of the machine or of the slower machining step.

Turning now to the case under consideration, in general all the processing steps from 1 to 3 described above require substantially the same time; the head-forming operations that are carried out in the same transfer machine also require the same time. This therefore is an optimal situation for a "transfer" machining process.

Unlike these, in the bolt-drilling station 3, it is necessary to remove the piece from the "transfer" line and to move it manually, or however with an "off-transfer-line" operation in a relative machining (drilling) station.

However, drilling too is a rather long operation compared to the other machining processes. Generally, then, the drilling operation requires an overall average time of more than 3 seconds.

The final consequence of this situation is that, as can be easily imagined, the productivity of the "transfer" line, although high, is wasted since in any case the pace of production of the bolt will always be the same as the longer operation, which in our case is the drilling of the sidewise passages.

In fact, in the described case, the productivity of the whole processing line drops drastically to a value of not more than 10-20% of the rate theoretically achievable if drilling was not required.

As is well known, such fittings are mass produced in an industrial scale to be used in an industrial environment characterized by extreme competition in all its components, and therefore starting with the cost of purchased products.

It is therefore imperative, in the field of the art involving these machining processes, to overcome the problems of low productivity explained above.

The main objective of the present invention is therefore to realize a method for the production of bolts to be used in said fittings for fluids known as "banjo fittings" that eliminates the drawback and the limit of productivity described above in a simple and safe manner, and preferably using widely known and tested techniques and processing methods.

This and other objectives are achieved by a method of production of a bolt of "banjo" type, and by a type of bolt for a hydraulic fitting according to the enclosed claims.

The characteristics and advantages of the invention will become evident from the following exemplary and non-limiting description, given with reference to the enclosed drawings, in which:

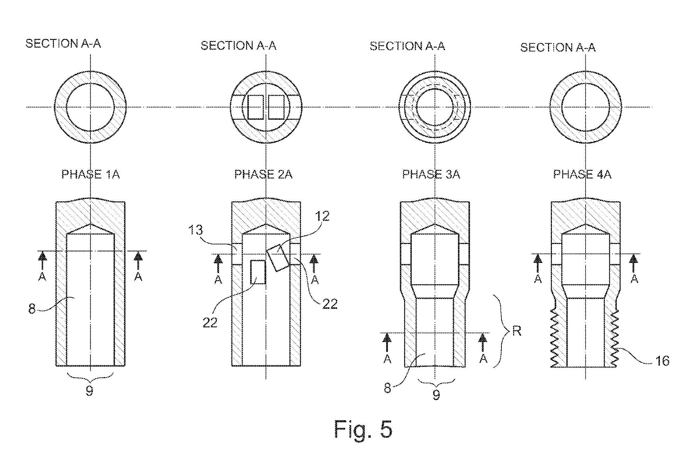

- Fig. 5 illustrates the various phases of a production cycle for a banjo bolt according to a preferred form of the invention;

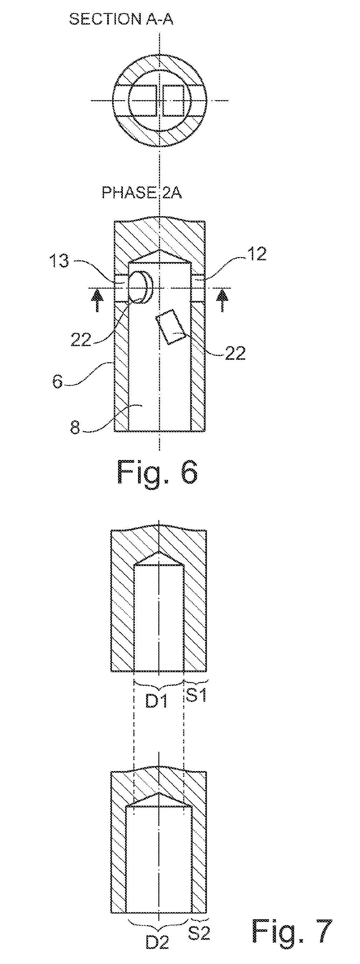

- Fig. 6 illustrates an axial cross section of, and for a purely descriptive purpose, a possible state of production of the bolt in accordance with an initial mode of the bolt making method according to the invention;
- Fig. 7 illustrates an axial plane cross section of a bolt made according to the known method and in accordance with the invention, before the application of the screw threads;

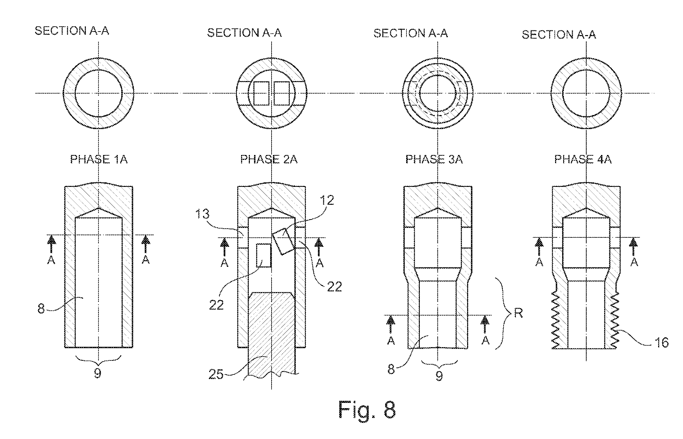

- Fig. 8 illustrates an improved production method with respect to the method of Fig. 5;

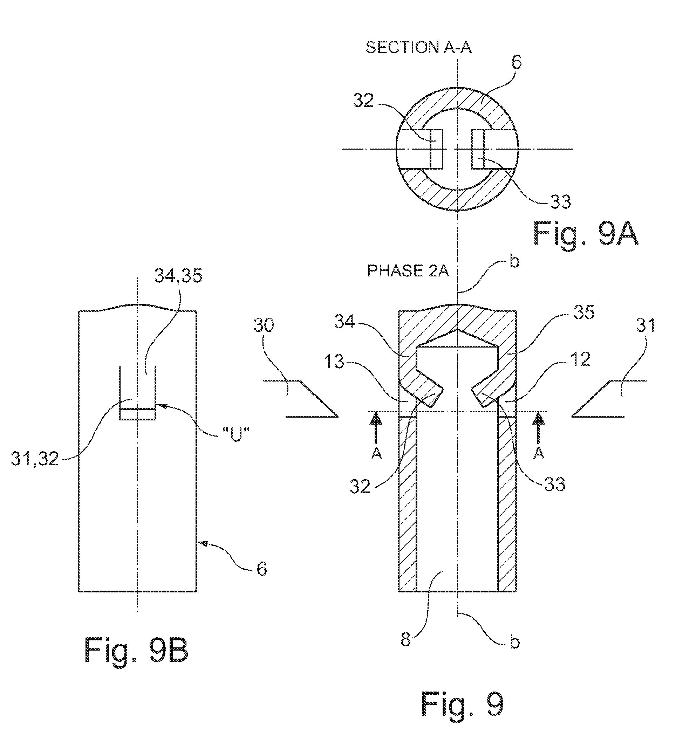

- Fig. 9 illustrates an improved variant of the method of Fig. 8;
- Fig. 9A illustrates the cross section A-A of the component of Fig. 9;
- Fig. 9B illustrates schematically an external plane view of the device of Fig. 9, according to a projection parallel to plane b-b of Fig. 9.

The present description refers specifically to a bolt or a part of a fitting of banjo type, but it is understood that the invention applies to all those cases in which there is a necessity to create one or more holes on the side wall of a hollow cylindrical element, and to maintain the outside diameter of the same element within defined limits.

In addition, in the figures that illustrate the steps of the process according to the known method and in accordance with the invention, the corresponding elements of the respective bolts will be indicated with the same reference numerals, in order to make it easier to compare with certainty the various processing phases.

With reference to Figures 5, 6, 7, the method according to the invention is carried out as follows:
- the construction of the banjo type of bolt starts from a round metal rod, not shown, made according to a known method, and proceeds according to the following machining phases:

- in the first phase 1A, said metal rod is machined, according to known procedures that could be identical to those already explained above regarding the known art, to obtain the internal cavity 8 and the bolt exit hole 9;
- in the next phase 2A, the annular cylindrical wall of the bolt body 6 is perforated in order to obtain said two passages 12 and 13.

Said machining phase is carried out, according to the teaching of the invention, preferably by means of a known through punching method, so as to eliminate in the punching area a small slug or cylinder 22, which falls spontaneously away from the bolt.

Said punching operation can be achieved in a suitably equipped and controlled workstation, and moreover it can normally be carried out in the same transfer line that performs the other operations required to form the internal cavity 8 and the screw thread.

This therefore eliminates every necessity of carrying out said steps 12 and 13 off line, thus radically eliminating the penalizing production drawback described above.

At this point, it is necessary to introduce some essential clarifications and improvements:
a) In order to easily eliminate such slug, that is, to create said passages 12, 13, it is desirable that the wall of the bolt be as thin as practically possible.
   In fact, it is well known that the thinner a cutting area on a wall is, the better will be the quality of the wall punching, all other conditions being equal.
   Conversely, the thicker the wall, the harder it is to punch through it and to eliminate the slug in a clean way, since, as is well known to a person skilled in the art, the thicker the wall in relation to the size of the punch, the more difficult it is for the punch in the final punching phase to cut through the wall, but only partially separates it, and the slug itself 22 remains attached with one side edge to a side edge of the passage 12, as shown in Fig. 6.
   In practice, in said final punching phase the slug is only partially cut by the punch, and the rest of the parting action becomes a "tearing" action, which however does not allow the removal of the slug, as this remains attached to the edge of the passage 12 and which therefore is not spontaneously removed.
   As is well known, this condition is dangerous because the slug can enter into the circulating flow of fluid at a later moment, with potentially serious results.
   To eliminate this risk, the metal rod is machined in such a way that its internal cavity has a greater width, so that the thickness of the wall of the bolt becomes correspondingly thinner, as shown for example in Fig. 7, which shows schematically that the dimension of the inside diameter "D1" of the bolt according to the known method is substantially smaller than the dimension of the diameter "D2" of a bolt made according to the invention, so that the thickness of the walls is reduced from "S1" to "S2" (naturally with the outside diameter of both being equal).
b) The second clarification concerns the positioning of said passages 12 and 13; in fact, in order to guarantee a machining symmetry and a balanced strain on the bolt, said passages 12 and 13 must be formed in a completely symmetrical manner, both in their position and in their dimensions, but this fact will be readily appreciated by a person skilled in the art.

Moreover, it will be evident that it is also possible to create additional passages, both on the same plane and on different planes with respect to the length of the bolt, but this fact does not imply in itself any difficulty of realization.

The advantage of such punching operation in phase 2A consists essentially of the fact that:
- the punching operation itself can be easily carried out on the same transfer line as the other operations, and therefore without requiring any "off-line" operations or, worse still, manual intervention;
- and moreover the time required for said operation is perfectly compatible with the "pace" of the transfer line, so that this operation is not significantly slower than the other steps in the cycle. Thus, the overall productivity of the system is not affected in any negative way.

After punching and therefore following the opening of said passages 12, 13, the bolt itself needs to be machined to form the screw thread 16.

The process could proceed according to the known method, that is by carrying out a thread cutting operation with stock removal, However, such operation would weaken the bolt wall, whose thickness, as explained above, was already reduced to facilitate the punching operation. To avoid this drawback, the best solution would be to create such screw thread using a rolling operation which is itself well known and therefore is not described herein.

However, such operation, although possible and easy, causes a problem on the product: in fact, as is known, rolling does not involve stock removal but only a selective pressure on the material.

In practice, in portion "R" on which rolling is carried out are formed the thread grooves desired, but in the portions between one groove and the next the material, squeezed by said pressure, is shifted and concentrates in a configuration of creased type having a cross section of triangular type.

The ridges of said creasing are thus pressed outwardly, with the final effect that said operation creates an undesired increase of the overall outside diameter with respect to the original allowed diameter.

For this reason, a known method and practice is to carry out a preliminary work phase 3A in which the outside diameter of the portion of the bolt, in said portion "R" on which the threading is to be formed, is suitably reduced; obviously, such operation must take place before rolling, naturally in order not to ruin the newly rolled threads.

Thus the present improvement proposes to apply, during the production cycle of the bolt according to the invention, an operation to reduce the diameter 3A of the external surface of the portion "R" of the bolt concerned, and a subsequent rolling operation 4A on the same portion "R", whose outside diameter has just been reduced, in order to create the desired threading.

As can be readily imagined and understood by a person skilled in the art, said reduction operation can also be achieved on the same transfer line used for the other previously described operations, and can also be carried out through a normal well-known drawing operation.

A further and readily appreciable improvement can also be achieved by applying the above-described operation 3A of reducing the diameter of the portion of the bolt involved "R", in a phase following the punching phase 2A explained earlier; otherwise, in fact, the newly punched out slug 22 within the cavity 8 of the bolt could be prevented from falling outside the bolt due to the hindrance caused by the reduction of the diameter of the exit hole 9 from said cavity 8.

In brief, the present invention teaches how to manufacture a fitting of banjo type, in which:
- the phase of creating the side passages 12, 13 on the bolt is carried out by a punching operation on a bolt having an external wall with a thickness that is noticeably reduced with respect to a similar bolt of the known art (phase 2A), with the purpose of improving the productivity of the system and the process;
- a phase of reducing the outside diameter of the bolt (phase 3A) is applied, for example by subjecting the same bolt to a drawing operation, to make it possible to perform the rolling operation without widening the outside diameter of the bolt;
- the rolling phase is then carried out on the same portion of the bolt (phase 4A), in order to avoid a process of threading with stock removal, which would weaken the bolt.

A further improvement of the process consists of the following: with reference to the same Fig. 5, it may happen that the punching of the bolt could cause an undesirable permanent deformation of the bolt walls, obviously toward the inside; in addition, if the walls are not absolutely rigid, the elastic deformation of the same walls toward the inside during punching could be to an extent such as to prejudice the effectiveness and the quality of the punching process, that is, the perforation of the bolt.

In order to avoid said risk, which increases as the thickness of the external annular wall of the bolt decreases, and with reference to Fig. 8, before and during the punching phase (phase 2A), a rigid and substantially cylindrical element 25, if necessary slightly flared, of a size that allows it to be readily inserted into said opening 9 and to fill almost completely the entrance cross section is inserted into said cavity 8.

Such operation is naturally facilitated by forming the head 26 of said rigid element 25 in a flared shape.

The purpose of said rigid element 25 is to serve as an anvil, on which the external annular wall of the bolt rests during the punching phase and that thus substantially prevents any temporary or permanent deformation of the external wall of the bolt.

It will also be clear that said rigid element 25 is automatically withdrawn from the relative bolt immediately after punching.

However, the solutions described above, though effective and suitable to achieve the desired objective, do not prevent the possibility that a potentially serious problem may sometime occur: in fact, it may happen that the slugs 22 cannot always be safely eliminated during the processing cycle, unless particular devices or operating procedures are provided to ensure their removal.

Or, a more serious occurrence, said slugs could remain trapped inside the fitting and, when it is installed, they could be carried directly in the flow of circulating liquid, thus creating serious risks, including the plugging of the circuit itself.

In order to avoid such risks, the following improvement is proposed. With reference to Fig. 9, said passages 12 and 13 are formed not by means of the above-described punching operation, but means of a shearing operation, in which two portions of the cylindrical shank 6 of the bolt are "sheared" by respective suitable tools 30, 31, so as to still form said passages 12, 13.

Said shearing operation must however be carried out with wedge-shaped tools so as to only shear an external profile that is not closed, that is, with an open perimeter approximately in the shape of a "U", as shown in Fig. 9B.

The shape of said tools 30, 31 must be such as to make it possible to cut only one part of the external surface of the bolt shank 6, so as to create respective flaps 32, 33 that are bent inwardly in the internal cavity 8 of the bolt, and that still remain firmly connected to the body 6 of the bolt through the portions 34, 35 that are not affected by the shearing operation, but are only bent.

Naturally, said tools must be inserted to a sufficient depth to suitably open the two passages 12, 13 from outside to said internal cavity 8, to allow the normal outflow of the liquid.

Moreover, the size and geometry of the elements involved will be such that said bending portions 34, 35 are of suitable width, and bent sufficiently little to ensure that said flaps 32, 33 cannot absolutely become detached even in the worst conditions of use; the optimal parameters of said characteristics are however easily recognized by a person skilled in the art.

Logically, said rigid element 25 can also be used with advantageous effects in this embodiment.

Therefore, it will also be clear that all such operations can be carried out on the same transfer line, which results in a decisive optimization of the production method, as it mainly makes it possible to avoid the off-line operation of drilling the bolt, and moreover removes the conditions and circumstances that otherwise could prejudice the qualitative characteristics of the bolt if said passages 12, 13 were made only by simply substituting the drilling operation with a single punching operation.

## Claims

1. Method for the production of bolts for Banjos fittings, comprising the steps of:
**a)** preparing an initial cylindrical rod,
**b)** working an inner portion of it so as to create inside it a cylindrical cavity (8), coaxial to said rod, opened on a base of it by a related hole (9),
**c)** providing a plurality of side passages (12, 13) placed in the cylindrical ring wall of the body (6) of said bolt,
**d)** threading the end portion of the outer cylindrical surface of said bolt, **characterized in that** said plurality of side passages (12, 13) is carried out by a punching operation (step 2A).

2. Method according to the preamble of claim 1, **characterized in that** said plurality of side passages (12, 13) is carried out through a partial shearing of two respective portions (U) of the outer surface of the bolt body (6).

3. Method according to claims 1 or 2, **characterized in that** in a later time-moment of said punching operation, a shrinking operation (step 3A) is carried out on the outer end portion (R) of said bolt, so as to reduce its outer diameter.

4. Method according to claim 3, **characterized in that** said shrinking operation is a drawing operation.

5. Method according to claims 4, **characterized in that**, in a successive step to said shrinking operation, said outer end portion (R) is subjected to a rolling operation (step 4A), able of creating on said portion a proper threading (16).

6. Method according any one of the previous claims, **characterized in that** first of and during said punching or drawing operation (step 2A), into said cavity (8) is at least partially introduced, a rigid element (25) with a preferably circular head (26), provided with a mechanical strength able of limiting the inflexion inwards of the cylindrical ring wall of the bolt body (6).

7. Method according to claim 6, **characterized in that** said head (26) of said rigid element (25) is flared.

8. Method according to any of the previous claims, **characterized in that** said shrinking step (step 3A) is carried out in a later time-moment of said shearing or punching step (step 2A).

9. Method according to any of the previous claims, **characterized in that** all the described steps (step 2A, 3A, 4A) and said step of introduction of said rigid element (25) are implemented on an automatic "transfer" working line.

10. Method according to any of the claims from 2 on, **characterized in that** said shearing operation is carried out through wedge-shaped tools (30, 31).

11. Method according to any of the claims from 2 on, **characterized in that** said shearing operation is able of making up at least an edge (32, 33) bent into said inner cavity (8) bolt, and connected by a portion (34, 35) of it to the remaining of said bolt body (6).

12. Bolts for "Banjos" fittings, **characterized in that** it is produced according to any of the previous claims.
